# EUROPEAN PATENT SPECIFICATION

(11) **EP 1 629 717 B1**
(45) Date of publication and mention of the grant of the patent: **22.10.2008**
(21) Application number: 05291775.4
(22) Date of filing: 24.08.2005
(51) Int. Cl.: A21C 1/14, B01F 15/04, B01F 15/02, G05D 11/00

(54) **System, method and apparatus adapted to supply dosed amounts of flour and of bread improver to a dough mixing machine**
System, Verfahren und Vorrichtung für die dosierte Zugabe von Mehl und Brotverbesserungsmittel zu einer Teigmischmaschine
Système, procédé et appareil pour l'addition dosée de farine et d'une composition d'amélioration du pain dans une machine à mélanger de pâte

(30) Priority: 25.08.2004 UA 40807021
(43) Date of publication of application: 01.03.2006
(73) Proprietor: Saf-Dniepr, Kiev 01023 (UA)
(72) Inventor: Shapovalova, Ludmila, 54056 Mykolaiv (UA)
(74) Representative: Koch, Gustave

(56) References cited:
- EP-A- 0 088 661
- CH-A- 247 259
- DE-A1- 19 910 212
- US-A- 2 935 993

## Description

The present invention relates to the supply of flour and bread improver to a dough mixing machine in a bakery.

In particular, it relates to a system and to a method for supplying dosed amounts of flour and bread improver to a dough mixing machine.

It also relates to an apparatus to be used in the said system and method for supplying doses of bread improver together with flour released from a flour hopper.

It is known to provide in an industrial bakery a supply of flour into a dough mixing machine, such a flour supply typically being in the form of a stream of flour released from a flour hopper, the amount of flour released being regulated by a flour dose-regulating device.

It is also known in the bakery field to add additional products, known as "baking improvers" or "bread improvers" to the dough in order to improve at least one property of the dough and/or of the final baked product, such as bread, buns and other leavened baked bakery products. The property to be improved may, for example, be dough rheology, dough handling, specific volume, dough stability, dough flexibility, dough tolerance, appearance of baked goods prepared from the dough (i.e. colour, flavour, aroma), oven spring, it may be associated with the structure or texture of the baked goods or with staling properties and shelf life stability and others.

Examples of bread improvers are ascorbic acid, food enzymes, gluten, starch, lecithin or combinations thereof.

A dosing device for a bread improver is proposed in RU-2221992 and comprises a hopper with a filling hole, an agitator inside the hopper, a driveshaft for turning the agitator, a vertical dosing channel including a feed screw whose driveshaft passes up the inside of the agitator driveshaft. This prior art proposition is of complex construction but imprecise in its dosing of the bread improver.

Document CH-A-247 259 discloses a system in accordance with the preamble of claim 1.

It is an object of the present invention to provide an apparatus for applying doses of one free-flowing solid material, in particular a bread improver, together with and in function of amounts of another free-flowing solid, in particular flour, and to make the said improved apparatus suitable for use in bakery operations.

Accordingly, the present invention provides a system for supplying a dough mixing machine with flour and doses of a free-flowing solid bread improver in accordance with claim 1.

It is an advantage of the present invention that the driven member of the bread improver dosing device is driven by the flour hopper dose-regulating device used to regulate the quantity of the flour, such that the free-flowing solid bread improver is dosed in proportion to the amount of flour released by the flour hopper.

The driven member of the dosing apparatus may be operably connected to the hopper dose-regulating device by a mechanical drive connection.

Each of the hopper dose-regulating device and the driven member of the dosing apparatus may be shaft driven, and the operable connection therebetween may be configured for co-rotation of their respective drive shafts.

The connection between the hopper dose-regulating device and the driven member of the dosing device may comprise a crank and connecting rod arrangement.

The system may comprise part of a continuous dough mixing arrangement in a bakery installation. The flour and the bread improver may be dosed continuously.

The present invention also provides a method in accordance with claim 4 for supplying flour and doses of a free-flowing solid bread improver to a dough mixing machine.

The present invention also provides a bread improver dosing apparatus in accordance with claim 6 for use in a system or in a method according to the present invention.

The driven member comprises a rotatable shaft that is driven off the flour hopper dose-regulation device by a crank and connecting rod arrangement.

The bread improver compartment may define a substantially horizontally disposed trough and the dose outlet is defined in the bottom of the trough, the driven member being substantially horizontally disposed along at least part of the trough such that operation of the driven member discharges doses of bread improver downwardly through the dose outlet.

The portion of the compartment that lies below the axis of the driven member may be defined substantially in the form of a semi-circular cross-section.

The driven member may comprise at least one blade, the driven member preferably comprising a series of blades each blade preferably being made of stainless steel. The blade or blades may be substantially planar.

The bread improver dosing apparatus may further comprise a grid with openings across the dose outlet. The grid may be removably mounted on the dosing apparatus, so as to allow replacement of the grid by a grid with a different number and/or different size of openings.

The bread improver dosing apparatus may further comprise a restrictor that is operable to vary the opening of the dose outlet. The restrictor may comprise a slideable plate.

The present invention will now be described by way of example only and with reference to the accompanying drawings, in which:
Figure 1 is a cross-section through a bread improver dosing system according to an embodiment of the present invention;
Figure 2 is a partially cut-away perspective view of a bread improver dosing apparatus used in the system of Figure 1; and
Figure 3 is a cross-section through the bread improver dosing apparatus of Figures 1 and 2, taken along the line III-III in Figure 1.

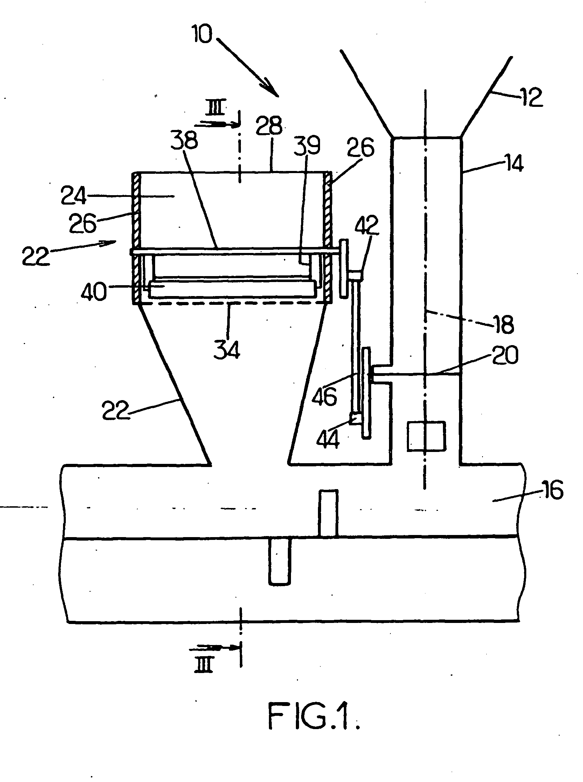

Referring to the drawings and first in particular to Figure 1, a bread improver dosing system comprises a flour dosing device 10 having a flour hopper 12 in which flour is kept and from which the flour is fed via a hopper outlet passage in the form of a chute 14 towards, and eventually into, a dough mixing machine 16. The amount of flour allowed to pass through the chute 14 is regulated by a hopper dose-regulating device in the form of a rotary valve 18 which is controlled by a drive-shaft 20.

The system also includes a bread improver dosing device 22, which comprises a bread improver compartment or hopper 24 comprising two sidewalls 26 connected one to the other by a sheet 28, all of which 26, 28 are preferably made of stainless steel due to the ease with which that material can be maintained hygienic and clean. The stainless side walls 26 and sheet 28 define between them a substantially horizontal trough 30, comprising a bread improver dose outlet 32 defined along at least part of the length of the bottom of the trough 30. The dose outlet 32 is preferably provided with a screen, mesh or grid 34 and is also preferably provided with a restrictor in the form of a shutter or slideable plate 36. The grid 34 is preferably removable so that it can be cleaned and also so that it is possible to replace it with an alternative grid 34 having different number and/or size of openings. The grid 34 may also act as a sieve for the bread improver that is dosed into the dough mixing machine 16 through it. The bread improver dosing device 22 may be installed onto the side of the dough mixing machine 16 itself, for example it may conveniently be fixed to it by angle iron brackets.

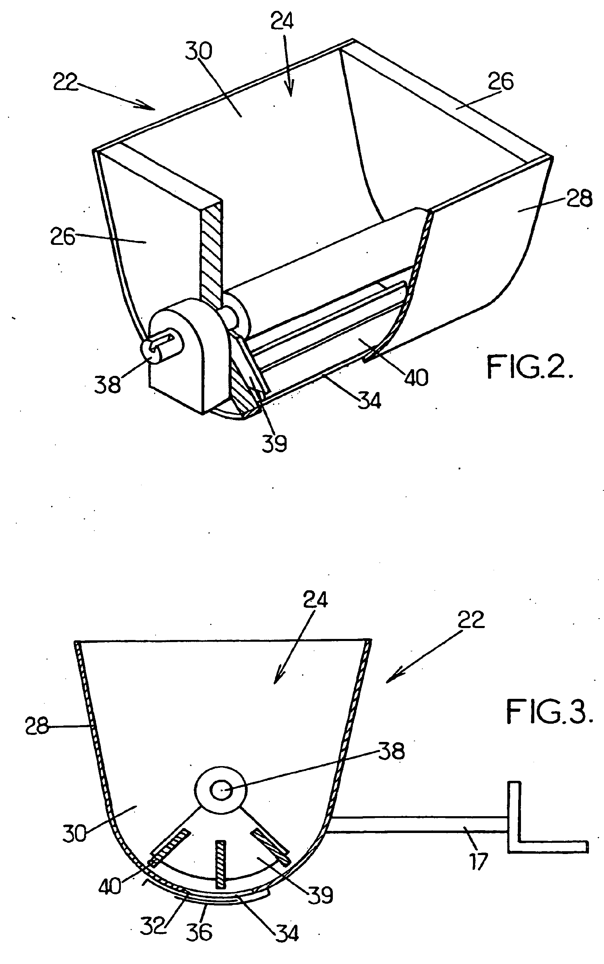

Referring now in particular to Figures 2 and 3, the sheet 28 of the bread improver hopper 24 is curved down on both sides towards the bottom of the trough 30, for example in the form of a semi-circle below the axis of the driveshaft 38 when viewed in the cross-section of Figure 3. Inside the bread improver hopper 24, there is a driven member in the form of a drive shaft 38 with at least one blade 40, whose axis of rotation lies substantially horizontally along at least part of the length of the trough 30. The drive shaft 38 of the preferred embodiment shown in figure 3 supports three blades 40 and the assembly 38, 40 is configured to be swung back and forth by clockwise and anti-clockwise rotation of the driveshaft 38. The driveshaft and blade assembly 38, 40 thus acts as an agitator and in use it sweeps bread improver out of the dose outlet 32.

The driveshaft 38 of the bread improver dosing device 22 is operably connected to the hopper dose-regulating device 18 in such a manner that the doses of the bread improver supplied to the dough mixing machine 16 are proportional to the amount of flour passing through the chute 14. In the preferred embodiment, this is achieved by a mechanical drive connection which configures the two drive shafts 20, 38 for co-rotation by a mechanical drive. The mechanical connection is achieved in this embodiment by a direct connection using a system of cranks and connecting rods. An offset crank pin 42 is provided on an end of the bread improver drive shaft 20 that protrudes outside one of its side walls 26. An offset crankpin 44 is also provided on an end of the drive shaft 20 of the flour hopper rotary valve 18. The two crankpins 42, 44 are disposed substantially one above the other and are connected by a connecting rod 46, such that the action of the agitator 38, 40 is influenced by at least one, and preferably both, of the size and rate of opening of the valve 18. One or both of the crank pins 42 may be mounted to its respective drive shaft 20, 38 with an alterable offset, for example by means of a changeable disc, so as to allow the drive ratio to be altered. Other forms of drive from the valve 18 to the driveshaft 38 of the bread improver dosing device 22 are not excluded and may for example include sprockets and a chain drive or pulleys and a belt.

Thus the movement of the blades 40 in the centre of the trough 30 causes the pulverulent bread improver to pass through the holes of the grid 34. The rate at which the bread improver actually leaves its dose outlet 32 is influenced not only by the agitator, but additional regulation is provided by the size of the holes in the grid 34 that is presently installed and also by sliding the optional shutter/plate 36 across the opening of the dose outlet.

In use, the pulverulent bread improver is introduced into the bread improver hopper 24 and, by means of the crank and connecting rod arrangement 42, 44, 46, the movement of the drive shaft 20 of the flour dosing device 10 is transmitted to the drive shaft 38 of the agitator 38, 40. The rotation of the agitator drive shaft 38 turns the blades 40 over a predefined angle, those blades 40 thus cause the required dose of bread improver to pass through the grid 34 into the dough mixing machine 16. The amount of bread improver introduced into the dough mixing machine 16 is a function of the amount of flour dosed and is further regulated by an increase or decrease of the number of openings exposed in the grid 34, by means of the shutter plate 36, by the increase or decrease of the angle of rotation of the agitator 38, 40 and/or by changing the length of the connecting rods 46 of the crank and connecting rod arrangement 42, 44, 46.

In an alternative embodiment, the drive for the bread improver agitator may be taken from a flour hopper dose-regulating device in the form of an agitator used in the flour hopper itself. The basic structure of such an arrangement may be similar or equivalent to the structure described above for the bread improver agitator. This arrangement may prove convenient in a system used for continuous dosing of flour, where the valve 18 described above may be absent from the flour hopper.

The device according to the invention can be used on all types of dough mixers, in particular on all kinds of continuous dough mixers and makes it possible to control in a practical manner the amount of bread improver dosed. The apparatus is of cheap mechanical construction and avoids the complications associated with weighing out doses or using complicated arrangements for dose control.

## Claims

1. A system for supplying a dough mixing machine with flour and doses of a free-flowing solid bread improver, the system comprising a flour hopper (12) for dosing flour, said flour hopper having a hopper outlet passage through which the flour travels towards the dough mixing machine (16), the amount of flour passing through the hopper outlet passage being regulated by a hopper dose-regulating device, the system further comprising a dosing apparatus (22) for supplying doses of the bread improver to the dough mixing machine, said dosing apparatus (22) comprising:
- a driven member being operably connected to the hopper dose-regulating device (18) by a mechanical drive connection: each of the hopper dose-regulating device (18) and the driven member of the dosing apparatus being shaft driven and the operable connection therebetween being configured for co-rotation of their respective drive shafts (20, 38),
thereby the doses of the bread improver supplied to the dough mixing machine are proportional to the amount of flour passing through the hopper outlet passage, **characterized in that** the dosing apparatus further comprises:
- a grid (34) with openings across the dose outlet, and
- a restrictor (36) that is operable to vary the opening of the dose outlet.

2. A system according to claim 1, wherein the connection between the hopper dose-regulating device (18) and the driven member of the dosing device comprises a crank and connecting rod arrangement.

3. A system according to any preceding claim, wherein the system comprises part of a continuous dough mixing arrangement (16) in a bakery installation.

4. A method for supplying flour and doses of a free-flowing solid bread improver to a dough mixing machine (16) using a system in accordance with anyone of claim 1 to 3, the method including storing flour in a hopper (12) and dosing flour towards the dough mixing machine through a hopper outlet passage thereof and regulating the amount of flour passing through the hopper outlet passage using a hopper dose-regulating device (18), the method further including supplying doses of the bread improver to the dough mixing machine using a bread improver dosing apparatus, the dosing apparatus including a driven member (38, 40) for discharging doses of the bread improver and the method including operably connecting the driven member of the dosing apparatus to the hopper dose-regulating device thereby regulating the doses of the bread improver supplied to the dough mixing machine in proportion to the amount of flour passing through the hopper outlet passage.

5. A method according to claim 4, wherein the flour and the bread improver arc dosed continuously.

6. A bread improver dosing apparatus for use in a system according to any one of claims 1 to 3 or in a method according to claim 4, the dosing apparatus comprising a compartment (24) for holding the free-flowing solid bread improver, a dose outlet (32) and a driven member for dispensing dosed amounts of the bread improve from the compartment through said dose outlet, wherein the driven member has a drive connection configured for the input of an external driving force, the external driving force being provided in use via a connection to a flour hopper dose-regulating device (18) and the compartment (24) defines a substantially horizontally disposed trough and the dose outlet (32) is defined in the bottom of the trough, the driven member (38, 40) being substantially horizontally disposed along at least part of the trough such that operation of the driven member discharges doses of bread improver downwardly through the dose outlet (32);
**characterized in that** said dosing apparatus further comprises:
- a grid (34) with openings across the dose outlet, and
- a restrictor (36) that is operable to vary the opening of the dose outlet.

7. A bread improver dosing apparatus according to claim 6, wherein the driven member comprises a rotatable shaft that is driven off the flour hopper dose-regulation device by a crank and connecting rod arrangement.

8. A bread improver dosing apparatus according to claim 7, wherein the portion of the compartment (24) that lies below the axis of the driven member (38) is defined substantially in the form of a semi-circular cross-section.

9. A bread improver dosing apparatus according to any one of claims 6 to 8, wherein the driven member (38) comprises at least one blade (40), the driven member preferably comprising a series of blades and the or each blade preferably being made of stainless steel.

10. A bread improver dosing apparatus according to claim 9, wherein the blade or blades are substantially planar.

11. A bread improver dosing apparatus according to claim 6, wherein the grid is removably mounted on the dosing apparatus (22), so as to allow replacement of the grid by a grid with a different number and/or different size of openings.

12. A bread improver dosing apparatus according to claim 6, wherein the restrictor comprises a slideable plate.

13. A bread improver dosing apparatus according to claim 6 to 12, wherein the driven member (38, 40) is configured to be swung back and forth by clockwise and anti-clockwise rotation of the driveshaft 38.

## Patentansprüche

1. System zur Versorgung einer Teigknetmaschine [dough mixing machine] mit Mehl und Dosen eines rieselfähigen festen Brotverbesserungsmittels, wobei das System einen Mehleinfülltrichter (12) zur Dosierung des Mehls umfasst, wobei der Mehleinfülltrichter einen Einfülltrichterauslassdurchgang [hopper outlet passage] aufweist, durch den das Mehl zur Teigknetmaschine (16) gelangt, wobei die Menge an Mehl, welche den Einfülltrichterauslassdurchgang passiert, durch eine Einfülltrichtereinheit für die Dosis-Regulierung geregelt wird, wobei das System weiterhin eine Dosiervorrichtung (22) für die Zufuhr von Dosen des Brotverbesserungsmittels zur Teigknetmaschine umfasst, wobei die Dosierungsvorrichtung (22)
- ein angetriebenes Bauteil, welches betriebsfähig mit der Einfülltrichtereinheit für die Dosis-Regulierung (18) durch eine mechanische Antriebsverbindung verbunden ist: sowohl die Einfülltrichtereinheit für die Dosis-Regulierung (18) als auch das angetriebene Bauteil der Dosiervorrichtung ist wellenangetrieben und die betriebsfähige Verbindung dazwischen ist für Co-Rotation ihrer jeweiligen Antriebswellen (20, 38) konfiguriert,
umfasst,
wodurch die Dosen des Brotverbesserungsmittels, welche der Teigknetmaschine zugeführt werden, proportional zu der Menge des Mehls sind, die den Einfülltrichterauslassdurchgang passiert, **dadurch gekennzeichnet, dass** die Dosiervorrichtung weiterhin
- ein Gitter (34) mit Öffnungen quer zum Dosisauslass und
- einen Durchlassbegrenzer (36), der zur Variierung der Öffnung des Dosisauslasses eingerichtet ist, umfasst.

2. System nach Anspruch 1, wobei die Verbindung zwischen der Einfülltrichtereinheit zur Dosisregulierung (18) und dem angetriebenen Bauteil der Dosiervorrichtung eine Kurbelwelle und eine Pleulstangenanordnung umfasst.

3. System nach einem der vorangegangenen Ansprüche, wobei das System einen Teil einer kontinuierlichen Teigknetanordnung (16) in einer Bäckereianlage [bakery installation] umfasst.

4. Verfahren zur Zufuhr von Mehl und Dosen eines rieselfähigen festen Brotverbesserungsmittels zu einer Teigknetmaschine (16) unter Verwendung eines Systems gemäß einen der Ansprüche 1 bis 3, wobei das Verfahren die Lagerung von Mehl in einem Einfülltrichter (12) und die Dosierung von Mehl zur Teigknetmaschine durch einen Einfülltrichterauslassdurchgang und die Regulierung der Menge an Mehl, die den Einfülltrichterauslassdurchgang passiert, unter Verwendung einer Einfülltrichtereinheit für die Dosis-Regulierung (18) beinhaltet, wobei das Verfahren weiterhin die Zufuhr von Dosen des Brotverbesserungsmittels zur Teigknetmaschine unter Verwendung einer Dosiereinheit für das Brotverbesserungsmittel beinhaltet, wobei die Dosiereinheit ein angetriebenes Bauteil (38, 40) für die Ausgabe von Dosen des Brotverbesserungsmittels beinhaltet und das Verfahren das betriebsfähige Verbinden des angetriebenen Bauteils der Dosiervorrichtung mit der Einfülltrichtereinheit für die Dosis-Regulierung beinhaltet, wodurch die Dosen an Brotverbesserungsmittel, welche der Teigknetmaschine zugeführt werden, im Verhältnis zur Menge an Mehl, die den Einfülltrichterauslassdurchgang passiert, steht.

5. Verfahren nach Anspruch 4, wobei das Mehl und das Brotverbesserungsmittel kontinuierlich dosiert werden.

6. Dosiervorrichtung für Brotverbesserungsmittel zur Anwendung in einem System gemäß einem der Ansprüche 1 bis 3 oder in einem Verfahren gemäß Anspruch 4, wobei die Dosiervorrichtung einen Teilraum [compartment] (24) zum Aufbewahren des rieselfähigen festen Brotverbesserungsmittels, einen Dosisauslass (32) und ein angetriebenes Bauteil für die Abgabe dosierter Mengen des Brotverbesserungsmittels aus dem Teilraum durch den Dosisauslass umfasst, wobei das angetriebene Bauteil eine Antriebsverbindung, die für die Einspeisung einer externen Antriebskraft konfiguriert ist, aufweist, wobei die externe Antriebskraft im Einsatz über eine Verbindung zu einer Einfülltrichtereinheit für die Dosis-Regulierung (18) bereitgestellt ist und das Kompartment (24) eine im Wesentlichen horizontal gelagerte [disposed] Wanne begrenzt und der Dosisauslass (32) im Boden der Wanne definiert ist, wobei das angetriebene Bauteil (38, 40) im Wesentlichen horizontal entlang mindestens Teilen der Wanne gelagert ist, so dass Betrieb des angetriebenen Bauteils Dosen an Brotverbesserungsmittel nach unten durch den Dosisauslass (32) entlässt, **dadurch gekennzeichnet, dass** die Dosisvorrichtung weiterhin
- ein Gitter (34) mit Öffnungen quer zum Dosisauslass und
- einen Durchlassbegrenzer (36), der zur Variierung der Öffnung des Dosisauslasses einsetzbar ist, umfasst.

7. Dosiervorrichtung für Brotverbesserungsmittel nach Anspruch 6, wobei das angetriebene Bauteil eine rotierbare Welle umfasst, die von der Mehleinfülltrichtereinheit zur Dosisregulierung durch eine Kurbelwelle und eine Pleulstangenanordnung angetrieben wird.

8. Dosiervorrichtung für Brotverbesserungsmittel nach Anspruch 7, wobei der Teil des Teilraums (24), der unterhalb der Achse des angetriebenen Bauteils (38) liegt, im Wesentlichen in der Form eines halbkreisförmigen Querschnitts ausgebildet ist.

9. Dosiervorrichtung für Brotverbesserungsmittel nach einem der Ansprüche 6 bis 8, wobei das angetriebene Bauteil (38) mindestens eine Klinge (40) umfasst, wobei das angetriebene Bauteil vorzugsweise eine Reihe von Klingen umfasst und die Klinge oder jede Klinge vorzugsweise aus rostfreiem Stahl besteht.

10. Dosiervorrichtung für Brotverbesserungsmittel nach Anspruch 9, wobei die Klinge oder Klingen im Wesentlichen planar ist/sind.

11. Dosiervorrichtung für Brotverbesserungsmittel nach Anspruch 6, wobei das Gitter abnehmbar an der Dosiervorrichtung (22) angebracht ist, um Ersatz des Gitters durch ein Gitter mit einer abweichenden Anzahl und/oder abweichenden Größe der Öffnungen zu ermöglichen.

12. Dosiervorrichtung für Brotverbesserungsmittel nach Anspruch 6, wobei der Durchlassbegrenzer eine verschiebbare Platte umfasst.

13. Dosiervorrichtung für Brotverbesserungsmittel nach Anspruch 6 bis 12, wobei das angetriebene Bauteil (38, 40) so konfiguriert ist, dass es durch Rotation der Antriebswelle (38) im Uhrzeigersinn und gegen den Uhrzeigersinn pendelt.

## Revendications

1. Système pour fournir à une machine à mélanger la pâte de la farine et des doses d'un agent améliorant le pain solide s'écoulant librement, le système comprenant une trémie à farine (12) pour doser la farine, ladite trémie à farine ayant un passage de sortie de trémie par lequel la farine se déplace vers la machine à mélanger la pâte (16), la quantité de farine passant par le passage de sortie de trémie étant régulée par un dispositif régulant les doses de la trémie, le système comprenant en outre un appareil doseur (22) pour fournir des doses de l'agent améliorant le pain à la machine à mélanger la pâte, ledit appareil doseur (22) comprenant :
- un membre commandé relié de manière fonctionnelle au dispositif régulant les doses de la trémie (18) par une liaison de commande mécanique ; chacun du dispositif régulant les doses de la trémie (18) et du membre commandé de l'appareil doseur étant commandé par un arbre et la liaison fonctionnelle entre eux étant configurée pour la co-rotation de leurs arbres de commande (20, 38) respectifs,
de sorte que les doses de l'agent améliorant le pain fournies à la machine à mélanger la pâte sont proportionnelles à la quantité de farine passant par le passage de sortie de trémie, **caractérisé en ce que** l'appareil doseur comprend en outre :
- une grille (34) avec des ouvertures transversalement à la sortie de dose, et
- un limiteur (36) qui est fonctionnel pour faire varier l'ouverture de la sortie de dose.

2. Système selon la revendication 1 où la liaison entre le dispositif régulant les doses de la trémie (18) et le membre commandé du dispositif doseur comprend un agencement à manivelle et bielle.

3. Système selon l'une quelconque des revendications précédentes où le système constitue une partie d'un agencement à mélanger la pâte continu (16) dans une installation de boulangerie.

4. Procédé pour fournir de la farine et des doses d'un agent améliorant le pain solide s'écoulant librement à une machine à mélanger la pâte (16) au moyen d'un système selon l'une quelconque des revendications 1 à 3, le procédé incluant le stockage de la farine dans une trémie (12) et le dosage de la farine vers la machine à mélanger la pâte par le biais d'un passage de sortie de trémie de celle-ci et la régulation de la quantité de farine passant par le passage de sortie de trémie au moyen d'un dispositif régulant les doses de la trémie (18), le procédé incluant en outre la fourniture de doses de l'agent améliorant le pain à la machine à mélanger la pâte au moyen d'un appareil doseur d'agent améliorant le pain, l'appareil doseur incluant un membre commandé (38, 40) pour décharger des doses de l'agent améliorant le pain et le procédé incluant la liaison fonctionnelle du membre commandé de l'appareil doseur avec le dispositif régulant les doses de la trémie pour réguler les doses de l'agent améliorant le pain fournies à la machine à mélanger la pâte proportionnellement à la quantité de farine passant par le passage de sortie de trémie.

5. Procédé selon la revendication 4 où la farine et l'agent améliorant le pain sont dosés en continu.

6. Appareil doseur d'agent améliorant le pain destiné à être utilisé dans un système selon l'une quelconque des revendications 1 à 3 ou dans un procédé selon la revendication 4, l'appareil doseur comprenant un compartiment (24) pour contenir l'agent améliorant le pain solide s'écoulant librement, une sortie de dose (32) et un membre commandé pour distribuer des quantités dosées de l'agent améliorant le pain depuis le compartiment par ladite sortie de dose, où le membre commandé a une liaison de commande configurée pour l'application d'une force de commande externe, la force de commande externe étant fournie pendant l'utilisation via une liaison avec un dispositif régulant les doses de la trémie à farine (18) et le compartiment (24) définit une auge disposée sensiblement horizontalement et la sortie de dose (32) est définie dans le fond de l'auge, le membre commandé (38, 40) étant disposé sensiblement horizontalement le long d'une partie au moins de l'auge de sorte que le fonctionnement du membre commandé décharge des doses d'agent améliorant le pain vers le bas par la sortie de dose (32) ;
**caractérisé en ce que** ledit appareil doseur comprend en outre :
- une grille (34) avec des ouvertures transversalement à la sortie de dose, et
- un limiteur (36) qui est fonctionnel pour faire varier l'ouverture de la sortie de dose.

7. Appareil doseur d'agent améliorant le pain selon la revendication 6 où le membre commandé comprend un arbre rotatif qui est commandé par le dispositif régulant les doses de la trémie à farine par un agencement à manivelle et bielle.

8. Appareil doseur d'agent améliorant le pain selon la revendication 7 où la partie du compartiment (24) qui est située sous l'axe du membre commandé (38) est définie sensiblement sous forme d'une section droite semi-circulaire.

9. Appareil doseur d'agent améliorant le pain selon l'une quelconque des revendications 6 à 8 où le membre commandé (38) comprend au moins une pale (40), le membre commandé comprenant de préférence une série de pales et la ou chaque pale étant de préférence en acier inoxydable.

10. Appareil doseur d'agent améliorant le pain selon la revendication 9 où la pale ou les pales est ou sont sensiblement planes.

11. Appareil doseur d'agent améliorant le pain selon la revendication 6 où la grille est montée de manière amovible sur l'appareil doseur (22) de manière à permettre le remplacement de la grille par une grille ayant un nombre d'ouvertures différent et/ou une dimension d'ouvertures différente.

12. Appareil doseur d'agent améliorant le pain selon la revendication 6 où le limiteur comprend une plaque coulissante.

13. Appareil doseur d'agent améliorant le pain selon les revendications 6 à 12 où le membre commandé (38, 40) est configuré pour être amené à pivoter dans un sens et dans l'autre par la rotation de l'arbre de commande (38) dans le sens des aiguilles d'une montre et en sens inverse des aiguilles d'une montre.
